# EUROPÄISCHE PATENTSCHRIFT

(11) **EP 1 108 498 B1**
(45) Veröffentlichungstag und Bekanntmachung des Hinweises auf die Patenterteilung: **30.07.2003**
(21) Anmeldenummer: 00121544.1
(22) Anmeldetag: 09.05.1997
(51) Int. Cl.: B23Q 5/04, B23Q 37/00

(54) **Werkzeugeinheit für eine Fräsmaschine**
Tool unit for milling machines
Outil pour fraiseuses

(30) Priorität: 21.05.1996 DE 19620485
(43) Veröffentlichungstag der Anmeldung: 20.06.2001
(62) Teilanmeldung aus: 97107648.4
(73) Patentinhaber: Jäger, Alfred, 61239 Ober-Mörlen (DE)
(72) Erfinder: Jäger, Alfred, 61239 Ober-Mörlen (DE)
(74) Vertreter: Haar, Lucas Heinz Jörn, Dipl.-Ing.

(56) Entgegenhaltungen:
- DE-A- 3 505 538
- DE-U- 29 505 586
- US-A- 4 795 293
- PATENT ABSTRACTS OF JAPAN vol. 011, no. 235 (M-612), 31. Juli 1987 (1987-07-31) & JP 62 048437 A (DAI SHOWA SEIKI KK), 3. März 1987 (1987-03-03)

## Beschreibung

Die Erfindung betrifft eine Werkzeugeinheit mit einem Basisteil, einem an diesem angeordneten schnellaufenden Antrieb für ein Fräswerkzeug, insbesondere einem Schnellfrequenz-Motor, und einem an der Abtriebswelle des Antriebes angeordneten Spannfutter für das Fräswerkzeug, die an die Werkzeugaufnahme der Spindel einer Fräsmaschine ansetzbar ist und zugleich an einen an der Fräsmaschine vorgesehenen Anschluß für die Antriebsenergie, für Kühlwasser und für Druckluft, ankuppelbar ist.

Eine solche Werkzeugeinheit ist durch Benutzung sowie aus der Prospektliteratur und beispiels weise aus der JP-A-6 218 184 bekannt.

Die bekannte Werkzeugeinheit wird zusammen mit einem Satz verschiedener Fräswerkzeuge und in gleicher Weise wie diese an einem Tellermagazin sitzend zur Verfügung gehalten, von dem sie selbsttätig in das Spannfutter der Spindel eingewechselt werden kann. Ihr Fräswerkzeug befindet sich dann auf der Achse der Spindel, wird aber nicht von dieser mit normaler Drehzahl angetrieben, sondern von ihrem eigenen, schnellaufenden Antrieb. Die Spindel dient nur noch zur Höheneinstellung; die Einstellung in den beiden waagerechten Richtungen erfolgt wie üblich durch den Maschinentisch. Mit dem schnellaufenden Fräswerkzeug können an einer normalen Fräsmaschine weitere Bearbeitungen durchgeführt werden, vor allem ein Schlichten.

Der Erfindung liegt die Aufgabe zugrunde; die Bearbeitungsmöglichkeiten an einer Fräsmaschine weiter zu steigern.

Gemäß der Erfindung ist zu diesem Zweck eine Werkzeugeinheit der eingangs genannten Art vorgesehen, bei der der Antrieb über ein mit der Spindel der Fräsmaschine gleichachsiges Drehlager und einen Halter in einem Winkel zur Achse des Drehlagers an dem Basisteil angebracht ist und durch einen Stellantrieb in dem Drehlager einstellbar ist, wobei ein Stelltrieb in dem Basisteil angeordnet ist, bei der ferner an dem Basisteil ein mit einem an der Fräsmaschine installierten Gegenstück verbindbares Kupplungsteil ausgebildet ist, durch das Antriebsenergie, Kühlwasser und Druckluft der Werkzeugeinheit zuführbar sind, und das zugeführte Kühlwasser und die zugeführte Druckluft innerhalb des Basisteils und durch das Drehlager und den Halter hindurch in den Antrieb weitergeführt werden.

Das solchermaßen mit schräger Achse angeordnete Fräswerkzeug, das nach allen Seiten hin ausgerichtet werden kann, ist zur Bearbeitung senkrechter Flächen bis in größere Tiefe imstande. Damit lassen sich beispielsweise die Formwerkzeuge zur Herstellung von Kunststoffteilen weitgehend auf der Fräsmaschine herstellen. Auch kleine Radien in größerer Tiefe können gearbeitet werden. Ein anschließendes Erodieren ist nur noch in Einzelfällen nötig und nur noch für einen viel kleineren Rest des Materials. Es können wesentliche Verkürzungen der Bearbeitungszeit erzielt werden.

Vorzugsweise wird die Antriebsenergie unter Umgehung des Drehlagers durch ein Kabel aus dem Basisteil direkt in den Antrieb geleitet.

Die Verstellbarkeit durch den Stelltrieb wird in aller Regel beliebig und programmgesteuert sein. Grundsätzlich sind aber auch beschränkte Möglichkeiten denkbar und ggf. schon vorteilhaft.

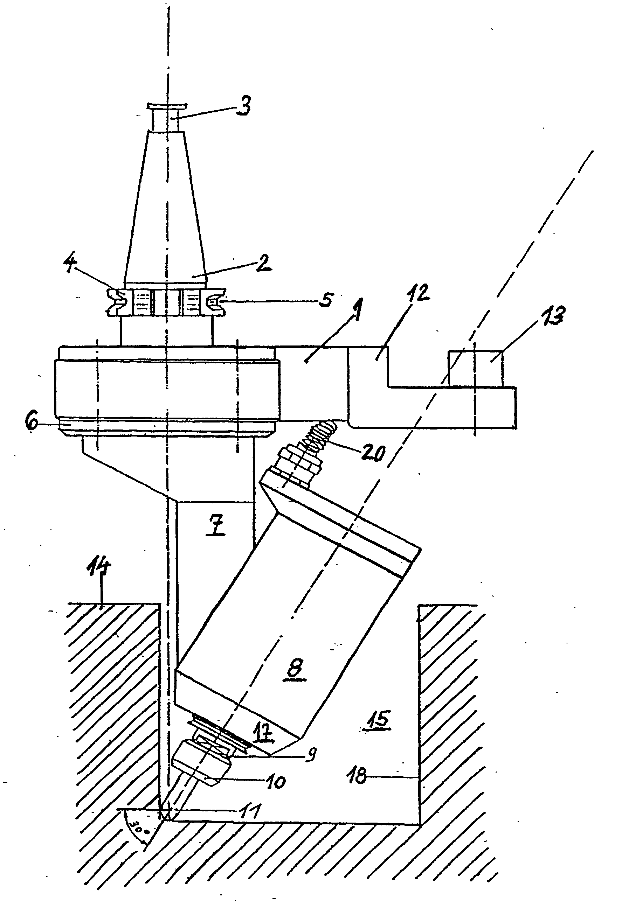

Die Zeichnung gibt ein Ausführungsbeispiel der Erfindung wieder.
Sie zeigt eine Werkzeugeinheit in Ansicht.

Ein Basisteil 1 ist mit einem Zentrierkonus 2 und einem Zugzapfen 3 versehen, um mittels dieser an die Werkzeugaufnahme der Spindel einer Fräsmaschine angesetzt zu werden.

Ein Bund 4 mit einer Umfangsrille 5 dient zur Aufnahme der Werkzeugeinheit an einem Tellermagazin.

In dem Basisteil 1 befinden sich ein Drehlager und ein Stelltrieb, wobei ein flacher Abtriebszapfen 6 nach unten heraustritt.

An dem Abtriebszapfen 6 ist exzentrisch ein senkrecht nach unten ragender Halter 7 angebracht, an den unter einem Winkel von 30° ein Antrieb 8 in Form eines Schnellfrequenz-Motors angesetzt ist. Die Abtriebswelle 9 des Antriebes 8 trägt ein Spannfutter 10 für ein Fräswerkzeug 11. Die Anordnung ist so getroffen, daß der Mittelpunkt der Rundung der Fräswerkzeugspitze auf der Achse der Spindel der Fräsmaschine liegt.

An einem Ausleger 12 des Basisteils 1 ist ein Kupplungsteil 13 ausgebildet zur Verbindung mit einem an entsprechender Stelle fest an der Fräsmaschine installierten Gegenstück. Durch die Kupplung werden die Antriebsenergie sowie Kühlwasser für den Antrieb 8 und ferner Druckluft in die Werkzeugeinheit eingeführt. Das Kühlwasser und die Druckluft werden innerhalb des Basisteils und durch das Drehlager und den Halter 7 hindurch in den Antrieb 8 weitergeführt. Die Druckluft tritt an dem Spannfutter 10 in Richtung parallel zum Fräswerkzeug 11 aus. Für das Wasser besteht eine Rückführungsleitung zu dem Kupplungsteil 13. Die Antriebsenergie fließt unter Umgehung des Drehlagers durch ein Wendelkabel 20 aus dem Basisteil direkt in den Antrieb 8.

Geschnitten dargestellt ist ein Werkstück 14 mit einem Hohlraum 15.
Der Hohlraum 15 ist zunächst mit unmittelbar an der Spindel eingesetzten Fräswerkzeugen herausgearbeitet worden; bei Drehzahlen bis zu 8000 min⁻¹ wurde geschruppt und anschließend semigeschlichtet
Mit der dargestellten Werkzeugeinheit wird mit bis zu 60000 min⁻¹ feingeschlichtet. Wie aus der Zeichnung ersichtlich, ist beim Bearbeiten der senkrechten Fläche 16 des Hohlraumes der Antrieb 8 nicht im Wege. Zu diesem Zweck ist sein unteres Ende 17 noch konisch gestaltet Der Konuswinkel beträgt 30° wie auch die Schrägstellung des Antriebes 8 gegenüber dem Drehlager durch das Winkelstück 7.
Zur Bearbeitung der gegenüberliegenden senkrechten Fläche 18 wird der Antrieb 8 mit dem Fräswerkzeug 11 durch den Stellantrieb herumgeschwenkt. Entsprechend verhält es sich mit den übrigen senkrechten Flächen.

Unter Verwendung eines gröberen Fräswerkzeuges 11 kann auch das Herausarbeiten des Hohlraumes bei Bedarf vervollständigt werden, vor allem, um kleinere Radien zu erzeugen als sie mit einem Fräskopf möglich sind, insbesondere bei Rillen an den senkrechten Flächen oder Ecken zwischen diesen.

## Patentansprüche

1. Werkzeugeinheit mit einem Basisteil (1), einem an diesem angeordneten schnellaufenden Antrieb (8) für ein Fräswerkzeug (11), insbesondere einem Schnellfrequenz-Motor, und einem an der Abtriebswelle (9) des Antriebes (8) angeordneten Spannfutter (10) für das Fräswerkzeug (11), die an die Werkzeugaufnahme der Spindel einer Fräsmaschine ansetzbar ist und zugleich an einen an der Fräsmaschine vorgesehenen Anschluß für die Antriebsenergie, für Kühlwasser und für Druckluft, ankuppelbar (13) ist, **dadurch gekennzeichnet, daß** der Antrieb (8) über ein mit der Spindel der Fräsmaschine gleichachsiges Drehlager und einen Halter (7) in einem Winkel zur Achse des Drehlagers an dem Basisteil (1) angebracht ist und durch einen Stellantrieb in dem Drehlager einstellbar ist, wobei ein Stelltrieb in dem Basisteil (1) angeordnet ist, daß an dem Basisteil (1) ein mit einem an der Fräsmaschine installierten Gegenstück verbindbares Kupplungsteil (13) ausgebildet ist, durch das Antriebsenergie, Kühlwasser und Druckluft der Werkzeugeinheit zuführbar sind, und daß das zugeführte Kühlwasser und die zugeführte Druckluft innerhalb des Basisteils und durch das Drehlager und den Halter (7) hindurch in den Antrieb weitergeführt werden.

2. Werkzeugeinheit nach Anspruch 1, **dadurch gekennzeichnet, daß** die Antriebsenergie unter Umgehung des Drehlagers durch ein Kabel (20) aus dem Basisteil (1) direkt in den Antrieb (8) geleitet wird.

## Claims

1. Tool unit comprising a base part (1), a rapidly rotating drive (8) arranged thereon for a milling tool (11), in particular a high-frequency motor, and a chuck (10), arranged on the drive shaft (9) of the drive (8), for the milling tool (11), the tool unit being attachable to the tool holder of the spindle of a milling machine and simultaneously being couplable (13) to a connection provided on the milling machine for the driving energy, for cooling water and for compressed air, **characterised in that** the drive (8) is mounted on the base part (1) at an angle to the axis of the pivot bearing via a pivot bearing which is coaxial with the spindle of the milling machine, and via a support (7), and can be adjusted by an adjusting device in the pivot bearing, an adjusting drive being arranged in the base part (1), **in that** a coupling part (13) which can be connected to a counter-piece installed on the milling machine is formed on the base part (1), through which coupling part (13) driving energy, cooling water and compressed air can be supplied to the tool unit, and **in that** the cooling water supplied and the compressed air supplied are guided onwards inside the base part and through the pivot bearing and the support (7) into the drive.

2. Tool unit according to claim 1, **characterised in that** the driving energy is guided from the base part (1) through a cable (20), bypassing the pivot bearing, directly into the drive (8).

## Revendications

1. Unité d'outil constituée d'une pièce de base (1), d'un entraînement (8) à rotation rapide disposé sur celle-ci pour un outil de fraisage (11), notamment un moteur à fréquence rapide, et d'un mandrin de serrage (10) disposé sur l'arbre d'entraînement (9) de l'entraînement (8) pour l'outil de fraisage (11), l'unité d'outil pouvant être introduite dans le support d'outil de la broche d'une fraiseuse et pouvant simultanément être raccordée (13) à un raccord prévu sur la fraiseuse pour l'énergie d'entraînement, l'eau de refroidissement et l'air comprimé, **caractérisée en ce que** l'entraînement (8) peut être disposé sur la pièce de base (1) au moyen d'un palier de pivotement coaxial à la broche de la fraiseuse et d'un support (7) en étant incliné par rapport à l'axe du palier de pivotement et être réglable dans le palier de pivotement par un organe de réglage, une transmission de réglage étant disposée dans la pièce de base (1), **en ce qu'**un élément de raccordement (13) pouvant être relié à un élément correspondant disposé sur la fraiseuse est formé dans la pièce de base (1) par lequel peuvent être amenés l'énergie d'entraînement, l'eau de refroidissement et l'air comprimé de l'unité d'outil, et **en ce que** l'eau de refroidissement amenée et l'air comprimé amené sont conduits à l'intérieur de la pièce de base (1) et à travers le palier de pivotement et le support (7) jusque dans l'entraînement.

2. Unité d'outil selon la revendication 1, **caractérisée en ce que** l'énergie d'entraînement est amenée directement de la pièce de base (1) à l'entraînement (8) par un câble (20) en contournant le palier de pivotement.
